# EUROPEAN PATENT APPLICATION

(11) **EP 0 539 122 A2**
(43) Date of publication of application: **28.04.1993**
(21) Application number: 92309473.4
(22) Date of filing: 16.10.1992
(51) Int. Cl.: G06F 1/035, H03M 7/00

(54) **Sinusoidal wave signal generating circuit**

(30) Priority: 23.10.1991 JP 275166/91
(71) Applicant: MATSUSHITA ELECTRIC INDUSTRIAL CO., LTD., Kadoma-shi, Osaka-fu, 571 (JP)
(72) Inventor: Ishigaki, Toshihiro, Sagamihara-shi (JP)
(74) Representative: Smith, Norman Ian

(57) **Abstract**

The present invention provides a sinusoidal wave signal generating circuit which makes it possible to reduce the circuit scale. Only the sinusoidal wave amplitude data are stored by relying upon the symmetry of the sinusoidal wave form for outputting sinusoidal wave amplitude data corresponding to input phase data. When the phase data other than the stored phase in the quarter other than the stored phase in the quarter of one period is input, the input data is converted to a relevant phase data in a quarter of one period so that the sinusoidal wave amplitude data in one period can be output.

## Description

### BACKGROUND OF THE INVENTION

The present invention relates to a sinusoidal wave signal generating circuit which is used for a Global Positioning System (GPS) receiver, etc.

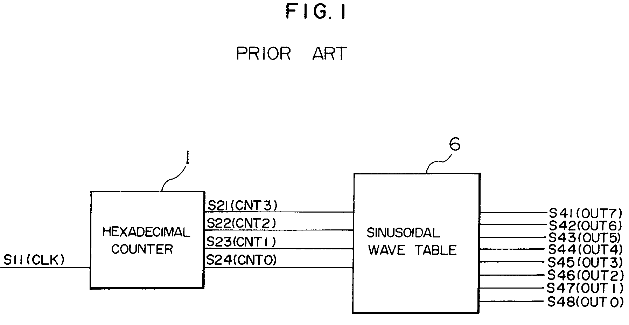

Fig. 1 shows the structure of a prior art sinusoidal wave signal generating circuit in which one period is divided by 16 and an output is represented by an absolute value of 7 bits and a sign of one bit. In Fig. 1, a reference numeral 1 denotes a hexadecimal counter for counting the phase 0 to 2π; 6 denotes a sinusoidal wave table for storing sinusoidal wave amplitude data at points which divide one period by 16.

S11 denotes a clock (CLK) for the hexadecimal counter 1. S21, S22, S23 and S24 on CNT3, CNT2, CNT1 and CNT0, respectively represent a 4-bit output signal output from the hexadecimal counter 1, which is input to the sinusoidal wave table 6 as a signal representing the phase. S41, S42, S43, S44, S45, S46, S47 and S48 on OUT7, OUT6, OUT5, OUT4, OUT3, OUT2, OUT 1 and OUT0, respectively represent an 8-bit sinusoidal wave output signal.

The operation of this structure will now be described.

The hexadecimal counter 1 consecutively increments the output signal represented by S21 to S24 by 1 in synchronization with each clock S11. The sinusoidal wave table 6 stores therein sinusoidal wave amplitude data at points which are obtained by dividing one period 2π by 16 and accepts the output signal including S21 to S24 representing the phase from the hexadecimal counter 1. The sinusoidal wave table 6 outputs a sinusoidal wave amplitude signal in the phase of (2π/16) x count. The sinusoidal wave output signals represented by S41 to S48 at 16 clocks constitute a sinusoidal wave of one period.

As mentioned above, the prior art sinusoidal wave signal generating circuit is capable of generating a sinusoidal wave signal having a frequency which is 1/16 of the clock frequency by incrementing the counter in the range of 0 to 15.

However, it is necessary for the sinusoidal wave table 6 to store the sinusoidal wave data in one period in the prior art sinusoidal wave signal generating circuit, resulting in a large scale of the circuit.

### SUMMARY OF THE INVENTION

It is therefore an object of the present invention to provide an excellent sinusoidal wave signal generating circuit in which the circuit scale of a sinusoidal wave table can be reduced to about one quarter of that of the prior art so that the circuit scale of a device can be reduced.

In order to accomplish the above mentioned object, the present invention provides a sinusoidal wave signal generating circuit comprising: an N-ary counter for counting the phase of a sinusoidal wave in one period to output the count; a sinusoidal wave table having stored sinusoidal wave amplitude data corresponding to the phase data in a quarter of one period; and a converting means for converting the phase data output from said N-ary counter into a phase data corresponding to the sinusoidal wave amplitude data stored in said sinusoidal wave table which is equal to the sinusoidal wave amplitude which is obtained correspondingly to said phase data when the sinusoidal wave amplitude data corresponding to the phase data output from said N-ary counter is not stored in said sinusoidal wave table.

The sinusoidal wave amplitude data in the phase 0 to π/2 may be stored in said sinusoidal wave table.

The sinusoidal wave amplitude data may be stored in the phase π/N to π/2 - π/N in the sinusoidal wave table.

The most significant bit of the output of the N-ary counter may be used as a signal representing the sign of the sinusoidal wave signal.

The sinusoidal wave table may comprise a read-only-memory or a logical circuit.

Since the sinusoidal wave signal generating circuit generates a sinusoidal wave signal in one period from sinusoidal wave amplitude data in a quarter of one period by utilizing the symmetry of the wave form of the sinusoidal wave signal, the circuit scale of the sinusoidal wave table can be reduced to about one quarter of the prior art so that the circuit scale of the device can be reduced.

### BRIEF DESCRIPTION OF THE DRAWINGS

Fig. 1 is a block diagram showing a prior art sinusoidal wave signal generating circuit;
Fig. 2 is a block diagram showing the structure of an embodiment of a sinusoidal wave generating circuit of the present invention;
Fig. 3 is a circuit diagram showing in detail the structure of a decoder shown in Fig. 2;
Fig. 4 is a chart showing the wave form of an output in one period from the sinusoidal wave signal generating circuit shown in Fig. 2;
Fig. 5 is a block diagram showing the structure of a second embodiment;
Fig. 6 is a circuit diagram showing in detail the structure of a decoder shown in Fig. 5; and
Fig. 7 is a chart showing the wave form of an output in one period from a sinusoidal wave signal generating circuit shown in Fig. 5.

### DESCRIPTION OF THE PREFERRED EMBODIMENT

Now, an embodiment of a sinusoidal wave signal generating circuit of the present invention will be described.

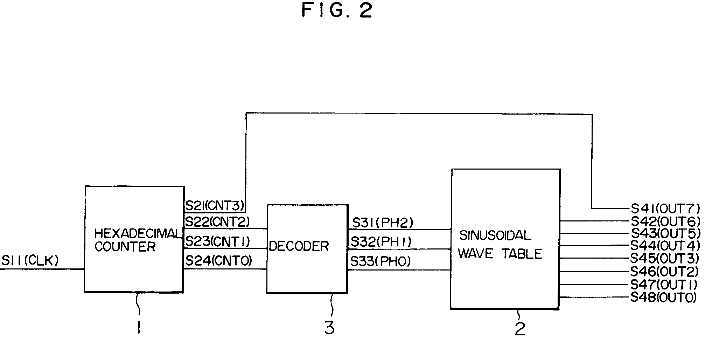

Referring now to Fig. 2, there is shown the structure of the first embodiment in which one period is divided by 16 and an output is represented by an absolute value of 7 bits and a sign of one bit. Like components which are identical with those of the prior art of Fig. 1 are represented by like numerals.

In Fig. 2, a reference numeral 1 denotes a hexadecimal counter which counts the phase 0 to 2π; a reference numeral 2 denotes a sinusoidal wave table in which data on the amplitude of the sinusoidal wave in a quarter period 0 to π/2 are stored. The sinusoidal wave table 2 comprises a ROM or a logical circuit. A reference numeral 2 denotes a decoder for converting an output signal from the hexadecimal counter 1 into an input signal to the sinusoidal wave table 2; S 11 denotes a clock (CLK) for the hexadecimal counter 1; S21, S22, S233 and S24 on CNT3, CNT2, CNT1 and CNT0, respectively represent a 4-bit signal from the hexadecimal counter 1, respectively.

S31, S32 and S33 on PH2, PH1 and PH0, respectively represent an input on addressing signal to the sinusoidal wave table; S41, S42, S43, S44, S45, S46, S47 and S48 on OUT7, OUT6, OUT5, OUT4, OUT3, OUT2, OUT1 and OUT0, respectively, represent an 8-bit sinusoidal wave out-put signal. The most significant bit state S21 on CNT3 from the hexadecimal counter 1 is output as the most significant bit of the sinusoidal wave output signal S41 (OUT7) representing a sign thereof without passing through the decoder 3 and the table 2. The lower significant three bit states S22 to S24 on CNT2 to CNT0, respectively are converted into S31 to S33 on PH2 to PH0 for the sinusoidal wave table 2 by the decoder 3, respectively. The sinusoidal wave table 2 stores the amplitudes of a sinusoidal wave signal at the corresponding addresses thereof, each address being assigned by the output (phase) from the decoder 3.

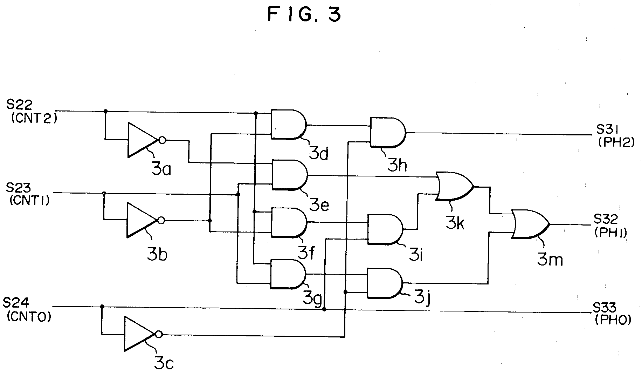

Fig. 3 shows the structure of the decoder 3 in detail. In Fig. 3, reference numerals 3a, 3b and 3c denote inverter circuits; 3d, 3e, 3f, 3g, 3h, 3i and 3j denote two-input AND circuits; 3k and 3m denote two-input OR circuits.

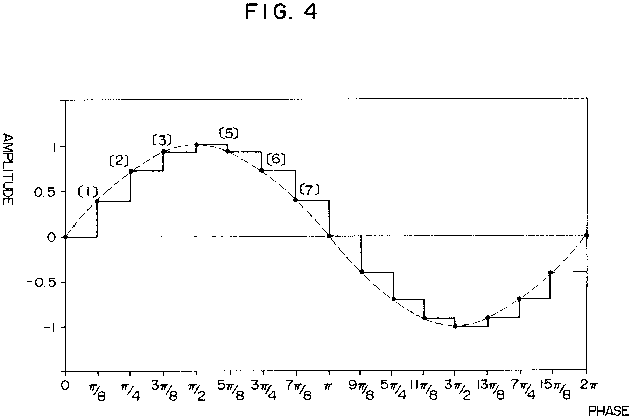

Fig. 4 shows the wave form of an output in one period. In Fig. 4, a step-wise wave form which is represented by a solid line, each step having a width of 2π/16 is the wave form of the output sinusoidal wave. In the present embodiment, the sinusoidal wave amplitude data at five points in the phase 0 to π/2 are stored in the sinusoidal wave table 2.

Now, operation in the structure of the first embodiment will be described.

The hexadecimal counter 1 counts the clock S11 (CLK) up in synchronization with the rise-up of each clock and consecutively increments the output signal by one and outputs it.

As is apparent from Fig. 4, due to the symmetry of the sinusoidal wave form, the amplitudes of the output signal from the sinusoidal wave generating circuit at points 3, 2 and 1 are equal to those at points 5, 6 and 7, respectively. Therefore, the lower three bit states S22 to S24 (CNT2 to CNT0) from the hexadecimal counter 1 at the points 5, 6 and 7 are converted into those at the points 3, 2 and 1, respectively by the decoder 3 to provide the input signal including the bit states S31 to S33 (PH2 to PH0) to the sinusoidal wave table 2. The one-bit state S21 (CNT3) from the hexadecimal counter 1 is output as the most significant bit signal S41 (OUT 7) representing the sign of the sinusoidal output signal from the counter 1 without passing through the decoder 5 and the table 4. In other words, the outputs S42 to S48 of the sinusoidal wave table 2 represent the absolute value of the amplitude of the sinusoidal wave and the output S41 represents the sign (positive/negative) of the output value.

The sinusoidal wave table 2 stores therein the sinusoidal wave amplitude data at 5 points between 0 to π/2 of the sinusoidal wave amplitude data at points which equally divide one period 2π by 16. Accordingly, the hexadecimal counter 1 outputs the output signal including the states S12 to S24 in each phase of 2π/16 x count so that the sinusoidal wave output signal represented by S41 to S48 to provide a sinusoidal wave of one period at intervals of 16 clocks.

Although the sinusoidal wave table 2 stores only sinusoidal wave amplitude data at 5 points in the phase 0 to π/2, provision of the decoder 3 enables the table 2 to generate a sinusoidal wave having a frequency which is 1/16 of that of clock in the first embodiment.

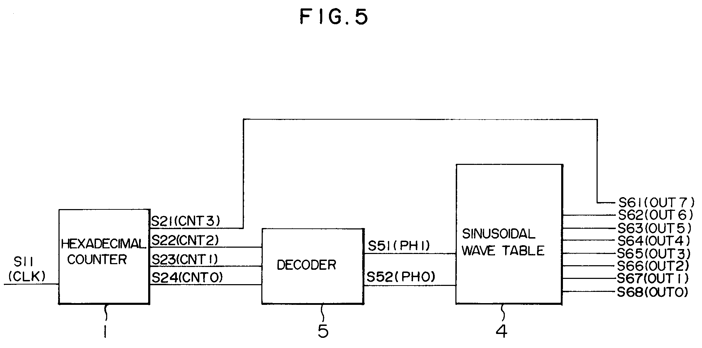

Referring now to Fig. 5, there is shown the structure of the second embodiment in which one period is divided by 16 and an output is represented by an absolute value of 7 bits and a sign of one bit.

In Fig. 5, a reference numeral 1 denotes a hexadecimal counter which counts the phase 0 to 2π; a reference numeral 4 denotes a sinusoidal wave table in which data on the amplitude of the sinusoidal wave in a quarter period π/16 to π/2 - π/16 are stored. A reference numeral 5 denotes a decoder for converting an output signal from the hexadecimal counter 1 into an addressing input signal applied to the sinusoidal wave table 4; S11 denotes a clock (CLK) for the hexadecimal counter 1. The sinusoidal wave table 4 stores the amplitudes of a sinusoidal wave signal at the corresponding addresses thereof, each address being addressed by the output (phase) from the decoder 5.

S21, S22, S23 and S24 on CNT3, CNT2, CNT1 and CNT0, respectively represent a 4-bit output signal from the hexadecimal counter 1, respectively.

S51 and S52 on PH1 and PH0, respectively represent an input signal to the sinusoidal wave table 4. S61, S62, S63, S64, S65, S66, S67 and S68 on OUT7, OUT6, OUT5, OUT4, OUT3, OUT2, OUT1 and OUT0, respectively represent an 8-bit sinusoidal wave output signal. The most significant bit state S21 on CNT3 from the hexadecimal counter 1 is output as the most significant bit of the sinusoidal wave output signal S61 (OUT7) representing the sign without passing through the decoder 5 and the table 4. The lower significant three bit states S22 to S24 on CNT2 to CNT0, respectively are converted into S51 to S52 on PH1 to PH0 for the sinusoidal wave table 4 by the decoder 5, respectively.

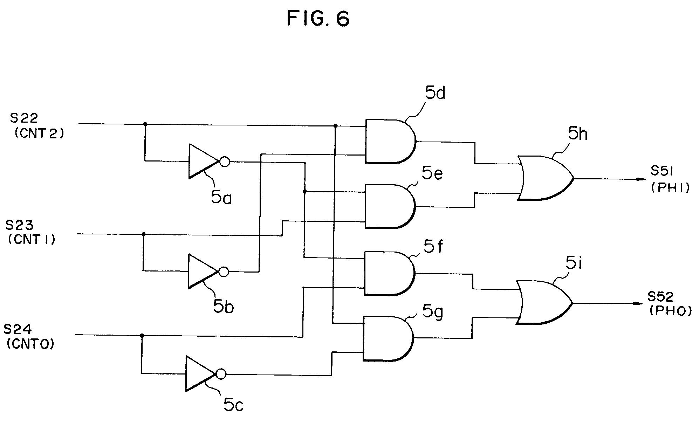

Fig. 6 shows the structure of the decoder 5 in the second embodiment. In Fig. 6, reference numerals 5a, 5b and 5c denote inverter circuits; 5d, 5e, 5f and 5g denote two-input AND circuits; 3h and 3i denote two-input OR circuits.

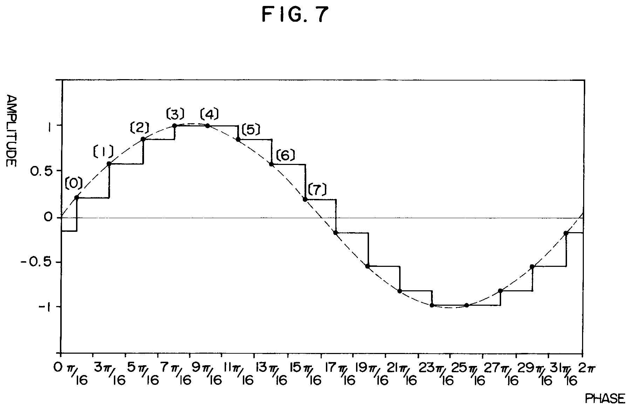

Fig. 7 shows the wave form of an output in one period from the sinusoidal wave generating circuit. In Fig. 7, a step-wise wave form which is represented by a solid line, each step having a width of 2π/16 is the wave form of the output sinusoidal wave. The sinusoidal wave amplitude data at four points in the phase π/16 to 7π/16 are stored in the sinusoidal wave table 4.

Now, operation in the structure of the second embodiment will be described.

The hexadecimal counter 1 increments the output signal (S21 to S24) by one in synchronization with the rise-up of the clock S11.

As is also apparent from Fig. 7, the most significant bit output signal S21 (CNT3) can be output from the hexadecimal counter 1 as the most significant bit S61 (OUT7) of the sinusoidal wave output signal representative of the sign thereof.

Due to the symmetry of the sinusoidal wave form, the amplitudes of the output signal from the sinusoidal wave generating circuit at the points 0, 1, 2 and 3 are equal to those at points 7, 6, 5 and 4, respectively.

Therefore, the values defined by the lower three bit output signals S22 to S24 (CNT2 to CNT0) from the hexadecimal counter 1 at the points 7, 6, 5 and 4 are converted into those at the points 0, 1, 2 and 3, respectively by the decoder 5 to provide the input addressing signal including the signals S51 to S52 (PH1 to PH0) to the sinusoidal wave table 4. This conversion can be advantageously carried out by the fewer number of circuits than those in the first embodiment.

The sinusoidal wave table 4 stores therein the sinusoidal wave amplitude data at only 4 points between π/16 to 7π/16 of the sinusoidal wave amplitude data at points which equally divides one period 2π by 16. Accordingly, the hexadecimal counter 1 outputs the addressing signal including the signals S21 to 24 in the phase of 2π/16 x count + π/16 so that the sinusoidal wave output signals S61 to S68 provide a sinusoidal wave of one period at intervals of 16 clocks.

In such a manner, the sinusoidal wave table 4 stores therein only sinusoidal wave amplitude data at 4 points in the phase π/16 to 7π/16 of the points which divide one period 2π by 16. Provision of the decoder 5 enables the table 4 to generate a sinusoidal wave having a frequency which is 1/16 of that of clock. Since it suffices for the sinusoidal wave table to store therein a fewer number of amplitudes than that in the first embodiment, the scale of the circuit can be made more compact.

Although the amplitudes at points which are obtained by dividing one period by 16 are stored in the sinusoidal wave table in the first and second embodiments, it is apparent that more precise output sinusoidal wave can be obtained by more finely dividing one period.

It is apparent from the above mentioned description that the scale of the circuit of the sinusoidal wave table can be reduced to about a quarter of that of the prior art circuit and the circuit scale of the device can be reduced since the sinusoidal wave signal of one period is generated based upon the stored data on the sinusoidal wave amplitude in a quarter of one period relying upon the symmetry of the wave form of the sinusoidal wave signal.

## Claims

1. A sinusoidal wave signal generating circuit comprising:
an N-ary counter (1) for counting the phase of a sinusoidal wave in one period to output the count;
a sinusoidal wave table (2, 4) having stored sinusoidal wave amplitude data corresponding to the phase data in a quarter of one period; and
a converting means (3, 5) for converting the phase data output from said N-ary counter (1) into a phase data corresponding to the sinusoidal wave amplitude data stored in said sinusoidal wave table (2, 4) which is equal to the sinusoidal wave amplitude which is obtained correspondingly to said phase data when the sinusoidal wave amplitude data corresponding to the phase data output from said N-ary counter is not stored in said sinusoidal wave table (2).

2. A sinusoidal wave generating circuit as defined in Claim 1 in which the sinusoidal wave amplitude data in the phase 0 to π/2 are stored in said sinusoidal wave table (2).

3. A sinusoidal wave signal generating circuit as define in claim 1 in which the sinusoidal wave amplitude data are stored in the phase π/N to π/2 - π/N in the sinusoidal wave table (4).

4. A sinusoidal wave signal generating circuit as defined in Claim 1 in which the most significant bit of the output of the N-ary counter (1) is used as a signal representing the sign of the sinusoidal wave signal.

5. A sinusoidal wave signal generating circuit as defined in Claim 1 in which said converting means (3, 5) comprises a logical circuit.

6. A sinusoidal wave signal generating circuit as defined in Claim 1 in which said sinusoidal wave table (3, 5) comprises a read-only-memory.
